# FASCICULE DE BREVET EUROPEEN

(11) **EP 4 419 322 B1**
(45) Date de publication et mention de la délivrance du brevet: **04.03.2026**
(21) Numéro de dépôt: 22801519.4
(22) Date de dépôt: 14.10.2022
(51) Int. Cl.: B29D 99/00, B29C 70/86, B29C 33/52, B29C 33/76, B64C 11/00, F01D 5/14, F01D 5/28

(54) **PROCÉDÉ DE FABRICATION D'UNE AUBE COMPRENANT UNE CAVITÉ RENFORCÉE**
VERFAHREN ZUR HERSTELLUNG EINER SCHAUFEL MIT VERSTÄRKTEM HOHLRAUM
METHOD FOR PRODUCING A VANE COMPRISING A REINFORCED CAVITY

(30) Priorité: 20.10.2021 FR 2111143
(43) Date de publication de la demande: 28.08.2024
(73) Titulaire: SAFRAN, 75015 Paris (FR)
(72) Inventeur: LANFANT, Nicolas, Pierre, 77550 Moissy-Cramayel (FR); TRANQUART, Bastien, 77550 Moissy-Cramayel (FR)
(74) Mandataire: Cabinet Beau de Loménie
(86) Numéro de dépôt international: PCT/FR2022/051942
(87) Numéro de publication internationale: WO 2023/067269

(56) Documents cités:
- WO-A1-2016/151495
- WO-A2-2015/017001
- DE-A1- 102018 125 243
- FR-A1- 2 559 422

## Description

### Domaine Technique

La présente invention se rapporte au domaine général des aubes, hélices ou aubages en matériau composite ayant une cavité interne.

### Technique antérieure

Dans le domaine des moteurs aéronautiques, les aubes de turbomachines peuvent être réalisées en matériau composite afin d'acquérir une résistance équivalente ou supérieure au métal, mais une masse globale inférieure. En effet, l'amélioration des performances de la turbomachine, en particulier par rapport à la consommation, nécessite une diminution de masse.

Dans le cas des aubes en matériau composite obtenues par tissage tridimensionnel, le matériau composite situé au cœur de l'aube n'a qu'une influence réduite sur les performances mécaniques de la pièce, alors qu'il compte pour une part non négligeable de la masse de l'aube. Ainsi, il est intéressant de fabriquer des aubes creuses, comprenant une peau en matériau composite obtenue par tissage tridimensionnel. Un tel procédé de fabrication est par exemple décrit dans le document US2015040396A1.

Toutefois la présence d'une cavité à l'intérieur de l'aube peut être pénalisante, particulièrement dans le cas d'une aube longue et d'une cavité de taille importante. En effet, dans ce cas, les peaux fines en matériau composite de l'aube présentent des modes propres de vibration bas qui se rapprochent des modes propres du moteur en fonctionnement. Ainsi, les peaux fines en matériau composite peuvent se mettre à vibrer, voire à entrer en résonnance.

En outre, la présence d'une cavité de taille importante à l'intérieur de l'aube diminue la résistance à la torsion et aux efforts aérodynamiques.

Le document FR 2 559 422 A1 divulgue un procédé de fabrication d'un élément à profil de pale comprenant une enveloppe creuse lamifiée accueillant une structure support ondulée.

### Exposé de l'invention

La présente invention a pour but de proposer une solution qui permet de réaliser des aubes de turbomachine en matériau composite ayant une cavité interne renforcée, en remédiant aux inconvénients précités.

A cet effet, l'invention propose un procédé de fabrication d'une aube de turbomachine en matériau composite ayant une cavité, comprenant au moins :
- la réalisation d'un noyau ayant la forme de la cavité de l'aube à fabriquer, ledit noyau comprenant une structure de renfort occupant seulement une partie du volume du noyau, le volume restant du noyau étant occupé par un matériau à caractère fugace,
- la formation d'une peau en matériau composite autour du noyau, et
- l'élimination du matériau à caractère fugace pour obtenir une aube en matériau composite ayant une cavité renforcée par la structure de renfort.

Ainsi, la cavité de l'aube obtenue est renforcée par une structure de renfort, conférant à l'aube une meilleure résistance mécanique et diminuant les risques de vibration des peaux. En occupant un volume limité de la cavité de l'aube, la structure de renfort n'ajoute pas une masse trop importante à l'aube.

Par « matériau à caractère fugace », on entend ici un matériau qui peut être éliminé mécaniquement, chimiquement ou thermiquement.

Selon une caractéristique particulière de l'invention, la structure de renfort présente au moins en partie une architecture en treillis.

Selon une autre caractéristique particulière de l'invention, la structure de renfort comprend au moins un élément de soutien joignant deux parois de la cavité en regard l'une de l'autre.

Cet élément de soutien peut par exemple prendre la forme d'une coque, d'une plaque ou d'un corps plein. Sur l'aube finale, ces éléments de soutien peuvent permettre de soutenir simultanément les deux peaux formant l'intrados et l'extrados de l'aube, de sorte à augmenter la résistance mécanique de l'aube et à limiter les risques de vibration des peaux.

Selon une autre caractéristique particulière de l'invention, l'élément de soutien est positionné sur un ou plusieurs ventres des modes propres de vibration des parois de la cavité.

En plaçant un ou plusieurs éléments de soutien sur les ventres des modes propres de vibration, on peut renforcer efficacement la cavité de l'aube ou de l'aubage avec des éléments de soutien réduits et légers.

Selon une autre caractéristique particulière de l'invention, l'élément de soutien est un corps plein épousant la forme d'une partie de la cavité.

Selon une autre caractéristique particulière de l'invention, la structure de renfort comprend des protubérances en saillie vers l'extérieur du noyau.

Ces protubérances en saillie assurent une meilleure liaison mécanique entre la structure de renfort et la peau en matériau composite de l'aube.

Selon une autre caractéristique particulière de l'invention, la peau en matériau composite est réalisée par l'injection d'une résine précurseur de matrice dans une préforme fibreuse recouvrant le noyau, le procédé comprenant en outre le traitement de ladite résine pour obtenir une peau comprenant un renfort fibreux densifié par ladite matrice.

Selon une autre caractéristique particulière de l'invention, la préforme fibreuse est réalisée par insertion du noyau dans une déliaison d'une ébauche fibreuse réalisée en une seule pièce par tissage tridimensionnel de fils.

Selon une autre caractéristique particulière de l'invention, la préforme fibreuse est obtenue par drapage de strates fibreuses autour du noyau.

Selon une autre caractéristique particulière de l'invention, la peau en matériau composite est réalisée par drapage de strates fibreuses pré-imprégnées d'une résine précurseur de matrice autour du noyau, le procédé comprenant en outre le traitement de ladite résine pour obtenir une peau comprenant un renfort fibreux densifié par ladite matrice.

### Brève description des dessins

[Fig. 1] La figure 1 est une vue schématique en trois dimensions d'une structure de renfort en treillis conformément à l'invention.
[Fig. 2] La figure 2 est une vue schématique en trois dimensions d'un noyau conformément à l'invention comprenant la structure de renfort de la figure 1.
[Fig. 3] La figure 3 est une vue schématique en trois dimensions d'une structure de renfort comprenant une coque conformément à l'invention.
[Fig. 4] La figure 4 est une vue schématique en trois dimensions d'un noyau conformément à l'invention comprenant la structure de renfort de la figure 3.
[Fig. 5] La figure 5 est une vue schématique en trois dimensions d'une structure de renfort comprenant une coque et un corps plein conformément à l'invention.
[Fig. 6] La figure 6 est une vue schématique en trois dimensions d'un noyau conformément à l'invention comprenant la structure de renfort de la figure 5.
[Fig. 7] La figure 7 est une vue schématique en trois dimensions d'une structure de renfort comportant un treillis, une coque et un corps plein conformément à l'invention.
[Fig. 8] La figure 8 est une vue schématique en trois dimensions d'un noyau conformément à l'invention comprenant la structure de renfort de la figure 7.
[Fig. 9] La figure 9 est une vue schématique en plan d'une ébauche fibreuse tissée destinée à la réalisation d'une aube par injection RTM conformément à un mode de réalisation de l'invention.
[Fig. 10] La figure 10 est une vue en coupe de l'ébauche fibreuse de la figure 9.
[Fig. 11] La figure 11 est une vue schématique d'une préforme fibreuse réalisée par l'insertion d'un noyau selon l'invention dans l'ébauche fibreuse des figures 9 et 10.
[Fig. 12] La figure 12 est une vue schématique en trois dimensions d'une aube réalisée à partir de la préforme fibreuse de la figure 11.

### Description des modes de réalisation

L'invention s'applique d'une manière générale à différents types de pièces en matériaux composites comprenant une cavité interne. L'invention trouve une application avantageuse pour les aubages de turbomachines, et notamment pour les aubes fixes ou stator pour moteur aéronautique à turbine à gaz de type aube directrice de sortie ou « OGV » (pour « outlet guide vane »).

On réalise un noyau ayant la forme de la cavité interne de l'aube en matériau composite à réaliser, et comprenant une structure de renfort.

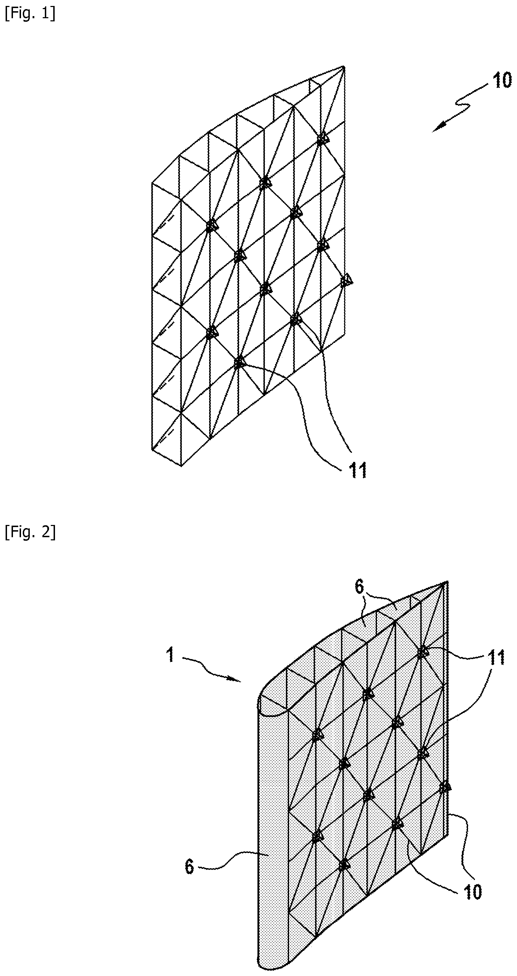

Comme illustré sur les figures 1 et 2, la structure de renfort peut prendre la forme d'un treillis et consister en un ensemble tridimensionnel de barres. Les figures 1 et 2 illustrent respectivement une structure de renfort 10 et un noyau 1 comprenant la structure de renfort 10. Le treillis 10 a les dimensions du noyau à réaliser, de sorte que la structure de renfort affleure à la surface extérieure du noyau comme illustré sur la figure 2. Dans l'exemple illustré sur les figures 1 et 2, les barres sont droites et de section constante. Les barres peuvent être de section non-constante ou courbées.

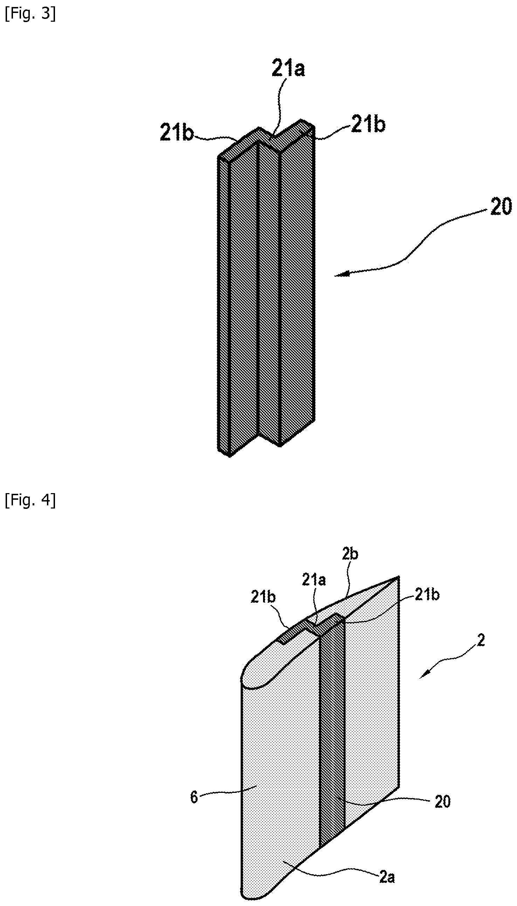

Comme illustré sur les figures 3 et 4, la structure de renfort peut comporter une ou plusieurs parties en forme de coque 20. Les figures 3 et 4 illustrent respectivement une structure de renfort 20 et un noyau 2 comprenant la structure de renfort 20. La structure de renfort 20 affleure à la surface du noyau.

Les parties en forme de coque peuvent être placées judicieusement de manière à soutenir ou renforcer des zones particulières de l'aube. Selon un mode particulier de réalisation de l'invention, une étude préalable des modes de vibration des peaux de l'aube peut être menée pour déterminer l'emplacement des ventres des modes de vibration. De préférence, on cherchera à déterminer les modes de flexion et de torsion simple. Ainsi, les parties en forme de coque seront de préférence placées orthogonalement aux endroits des peaux correspondant à des ventres.

Dans l'exemple illustré sur les figures 3 et 4, la structure de renfort 20 en forme de coque peut comprendre une partie centrale 21a et deux parties de soutien 21b positionnées perpendiculairement de part et d'autre de la partie centrale 21a. La partie centrale 21a est positionnée perpendiculairement aux deux surfaces 2a et 2b du noyau 2 destinées à venir en contact des peaux de l'aubage, qui correspondront à l'intrados et à l'extrados de l'aube. Ainsi, la structure de renfort pourra soutenir et renforcer les deux peaux de l'aubage afin de limiter leurs vibrations. Les dimensions de la partie centrale 21a et deux parties de soutien 21b peuvent différer de celles représentées sur les figures 3 et 4. De préférence, on optera même pour des épaisseurs plus fines pour la partie centrale 21a et pour les parties de soutien 21b, afin d'en réduire la masse.

Les parties en forme de coque peuvent également être positionnées au niveau des zones de l'aubage de plus grande épaisseur. En outre, les parties en forme de coque peuvent également présenter une géométrie intéressante d'un point de vue acoustique, par exemple pour réduire les nuisances sonores.

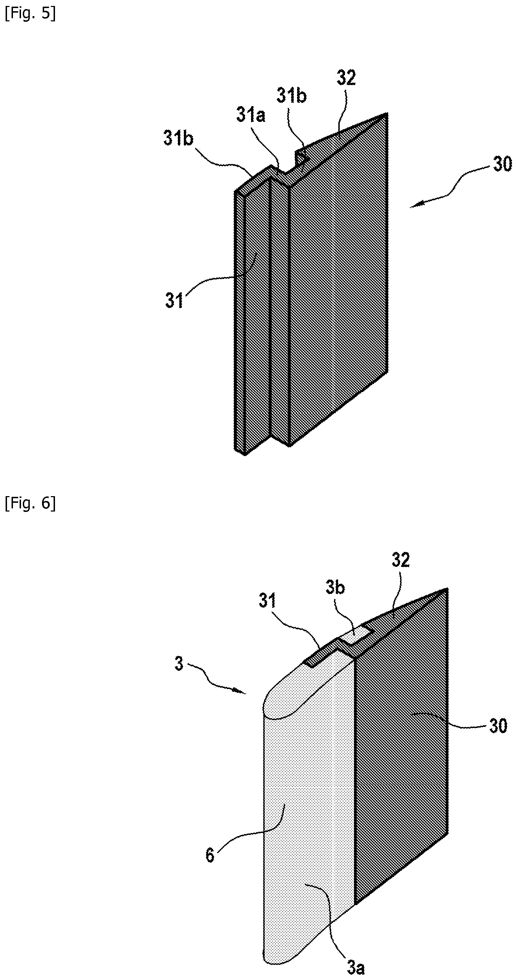

La structure de renfort peut également comporter des corps pleins, qui épouseront la forme d'une partie de la cavité de l'aube. Les figures 5 et 6 illustrent respectivement une structure de renfort 30 et un noyau 3 comprenant la structure de renfort 20.

Comme illustré sur les figures 5 et 6, la structure de renfort 30 comporte un corps plein 32 et une partie en forme de coque 31. En particulier, la partie en forme de coque 31 comprend une partie centrale 31a et deux parties de soutien 31b positionnées perpendiculairement de part et d'autre de la partie centrale 31a. La partie centrale 31a est positionnée perpendiculairement aux deux surfaces 3a et 3b du noyau 3 destinées à venir en contact des peaux de l'aubage, qui correspondront à l'intrados et à l'extrados de l'aube.. Les dimensions de la partie centrale 31a et deux parties de soutien 31b peuvent différer de celles représentées sur les figures 5 et 6. De préférence, on optera même pour des épaisseurs plus fines pour la partie centrale 31a et pour les parties de soutien 31b, afin d'en réduire la masse.

es corps pleins de la structure de renfort peuvent être placés judicieusement de manière à soutenir ou renforcer des zones particulières de l'aube. Toutefois, si la structure de renfort est en métal, on cherchera à limiter la présence et la taille de corps pleins dans la structure de renfort métallique afin de limiter sa masse.

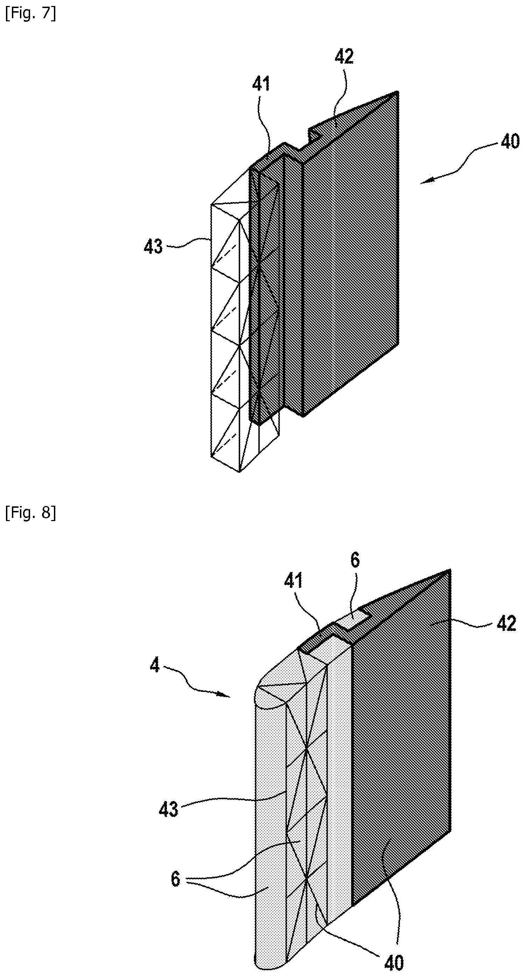

La structure de renfort peut comprendre et combiner des types de renfort différents. Ainsi, comme illustré sur les figures 7 et 8, la structure de renfort peut comporter des parties en treillis 43, des parties en forme de coque 41 et des corps pleins 42.

Les figures 7 et 8 illustrent respectivement une structure de renfort 40 et un noyau 4 comprenant la structure de renfort 40. Les parties en treillis peuvent être utilisées de manière privilégiée pour les parties du noyau ayant de grands volumes. Les corps pleins peuvent être utilisés de manière privilégiée dans des parties du noyau ayant des volumes restreints.

Comme illustré sur les figures 1 et 2, la structure de renfort peut comprendre des protubérances 11 en saillie depuis la surface externe du noyau et dirigées vers l'extérieur. Ces protubérances saillantes 11 ont pour but d'assurer une accroche mécanique entre la structure de renfort et les peaux en matériau composite de l'aube. Ces protubérances saillantes 11 peuvent être disposées de manière particulièrement intéressante de sorte à assurer une accroche mécanique au niveau des peaux de l'aube en matériau composite ayant une cavité. Par exemple, dans le cas d'un aubage, les protubérances saillantes 11 seront principalement situées de sorte à assurer une liaison mécanique entre la structure de renfort et l'intrados et l'extrados de l'aubage.

Dans l'exemple présenté sur les figures 1 et 2, les protubérances saillantes sont orientées perpendiculairement à la surface du noyau. Si le noyau est destiné à être inséré dans une préforme fibreuse, par une déliaison par exemple, de telles protubérances saillantes peuvent gêner l'insertion du noyau en s'accrochant dans les fibres de la préforme avant la mise en place finale du noyau. Ainsi, selon un mode particulier de réalisation de l'invention, si le noyau est inséré d'abord par une première surface, les protubérances saillantes seront dirigées de manière opposée à ladite surface. Par conséquent, le noyau pourra être inséré par ladite surface sans que les protubérances ne « s'agrippent » aux fibres. Lorsque le noyau est correctement mis en position dans la préforme fibreuse, les protubérances saillantes permettent une accroche mécanique, en particulier dans la direction opposée à la direction d'insertion du noyau.

Les structures en treillis permettent aisément le passage d'éléments fonctionnels tels que des câbles, des tuyaux, des conduits ou des fils, à l'intérieur et au travers de la structure de renfort interne de l'aube. En revanche, il peut être nécessaire de réaliser des alésages à l'intérieur des structures en forme de coque ou des corps pleins pour permettent le passage de ces éléments fonctionnels de l'aube.

Selon un premier mode de réalisation du noyau de l'invention, on réalise la structure de renfort en métal.

Un métal à faible coefficient de dilatation thermique sera privilégié pour la fabrication de la structure de renfort afin de limiter les contraintes à l'intérieur de l'aube en matériau composite. Le métal de la structure de renfort peut par exemple être du titane, de l'inconel ou de l'acier inoxydable.

La structure de renfort métallique peut être réalisée par fabrication additive métallique. La structure de renfort métallique peut également être fabriquée par l'assemblage de plusieurs parties métalliques selon les moyens conventionnels. L'assemblage des différentes parties peut par exemple être réalisé par soudage ou par collage.

La structure de renfort métallique ainsi réalisée est ensuite introduite dans un outillage ayant la forme de la cavité interne de l'aube à réaliser. Un matériau fugace 6 est injecté ou coulé dans l'outillage, afin de former un noyau ayant la forme de la cavité de l'aube à réaliser et comprenant la structure de renfort métallique. Le matériau fugace peut être coulé ou injecté à haute température, par exemple à une température supérieure à 400°C. En effet, comme la structure de renfort est métallique, le matériau fugace peut être manipulé à des températures relativement élevées sans détériorer la structure de renfort. Si la structure de renfort métallique possède des protubérances saillantes, l'outillage de coulée ou d'injection permet l'accueil de ces protubérances saillantes.

Le matériau fugace peut être un sel ou un mélange de sels, par exemple un mélange de chlorure de potassium et de carbonate de potassium. Le matériau fugace peut être un sable ou un mélange de sable. L'utilisation d'un tel matériau fugace pour la création d'un noyau est par exemple décrite dans le document EP0192507B1.

Selon une variante, le noyau complet peut être réalisé en une seule étape, c'est-à-dire que la structure de renfort métallique est réalisée simultanément avec la réalisation du reste du noyau. Le noyau est réalisé par fabrication additive d'au moins deux matériaux, le premier matériau étant un métal destiné à réaliser la structure de renfort et le deuxième matériau étant destiné à réaliser la partie fugace 6 du noyau. Le deuxième matériau peut être par exemple être un matériau du type ST-130^{™} FDM commercialisé par la société Stratasys, qui se solubilise dans une solution basique sans détériorer le matériau composite de l'aube à fabriquer. Dans cette variante, le deuxième matériau destiné à réaliser la partie fugace 6 du noyau peut être disposé uniquement sur la surface de la cavité, autour de la structure de renfort métallique Ainsi, le noyau n'est pas nécessairement un noyau plein. L'utilisation d'un noyau partiellement vide permet de retirer la partie fugace 6 plus rapidement lors de son étape de retrait, qui sera décrite plus loin dans la description.

Selon un deuxième mode de réalisation du noyau de l'invention, on réalise la structure de renfort en polymère ou en composite. Le polymère pour la fabrication de la structure peut contenir des fibres discontinues ou continues. Les fibres peuvent être en verre, en carbone ou en aramide. La résine peut être thermodurcissable ou thermoplastique. De préférence, la structure de renfort en polymère ou en composite doit pouvoir supporter sans être altérée les températures de traitement des peaux en matériau composite. Ainsi, la structure de renfort peut de préférence supporter des températures allant jusqu'à 180°C sans être altérée.

La structure de renfort composite peut être réalisée par fabrication additive composite. La structure de renfort en matériau composite peut également être fabriquée par l'assemblage de plusieurs parties en matériau composite, par exemple par collage.

La structure de renfort composite ainsi réalisée est ensuite introduite dans un outillage ayant la forme de la cavité interne de l'aube à réaliser. Un matériau fugace 6 est injecté, coulé ou compressé dans l'outillage, afin de former un noyau ayant la forme de la cavité de l'aube à réaliser et comprenant la structure de renfort composite. De préférence, le matériau fugace doit être coulé, injecté ou compressé à une température ne détériorant la structure de renfort en matériau composite. Par exemple, le matériau Aquacore^{®} est un matériau céramique qui peut être utilisé comme matériau fugace pour former le noyau, car il s'agglomère à haute pression et ne nécessite qu'une post-cuisson à une température inférieure à 100°C. Le matériau fugace peut être un matériau à base de sel ou de sable, ou un mélange. Si la structure de renfort composite possède des protubérances saillantes, l'outillage de coulée ou d'injection permet l'accueil de ces protubérances saillantes.

Selon une variante, le noyau complet peut être réalisé en une seule étape, c'est-à-dire que la structure de renfort composite est réalisée simultanément avec la réalisation du reste du noyau.

Selon un premier exemple de cette variante, le noyau est réalisé par fabrication additive d'au moins deux matériaux, le premier matériau étant un composite destiné à réaliser la structure de renfort et le deuxième matériau étant destiné à réaliser la partie fugace 6 du noyau. Le deuxième matériau peut être par exemple être un matériau du type ST-130^{™} FDM commercialisé par la société Stratasys, qui se solubilise dans une solution basique sans détériorer le matériau composite de l'aube à fabriquer. Dans cette variante, le deuxième matériau destiné à réaliser la partie fugace 6 du noyau peut être disposé uniquement sur la surface de la cavité, autour de la structure de renfort composite. Ainsi, le noyau n'est pas nécessairement un noyau plein. L'utilisation d'un noyau partiellement vide permet de retirer la partie fugace 6 plus rapidement lors de son étape de retrait, qui sera décrite plus loin dans la description.

Selon un deuxième exemple de cette variante, le noyau peut être fabriqué par frettage d'au moins deux poudres, la première poudre étant destinée à former le composite de la structure de renfort, et la deuxième poudre étant destinée à former la partie fugace 6 du noyau.

Lorsque le noyau ayant la forme de la cavité interne de l'aube en matériau composite a été réalisé, il est utilisé pour fabriquer ladite aube en matériau composite.

Dans les modes de réalisation du noyau de l'invention présentés ci-dessus, il est important que la surface du noyau soit étanche. En effet, lors du procédé de fabrication de l'aube en matériau composite ayant une cavité interne, un fluage de la résine vers l'intérieur du noyau augmenterait la masse de l'aube en remplissant la cavité interne avec une matière non souhaitée. En outre, le fluage de la résine vers l'intérieur du noyau pourrait entraîner la formation de porosités ou de zones sèches dans le matériau composite extérieur.

Une opération de finition peut être réalisée sur le noyau fabriqué comme décrit précédemment, pour améliorer l'état de surface ou l'étanchéité du noyau. Cette opération de finition est particulièrement intéressante pour les noyaux réalisés par impression 3D.

Nous allons maintenir décrire différents modes de réalisation d'une aube comprenant une cavité renforcée selon le procédé de l'invention.

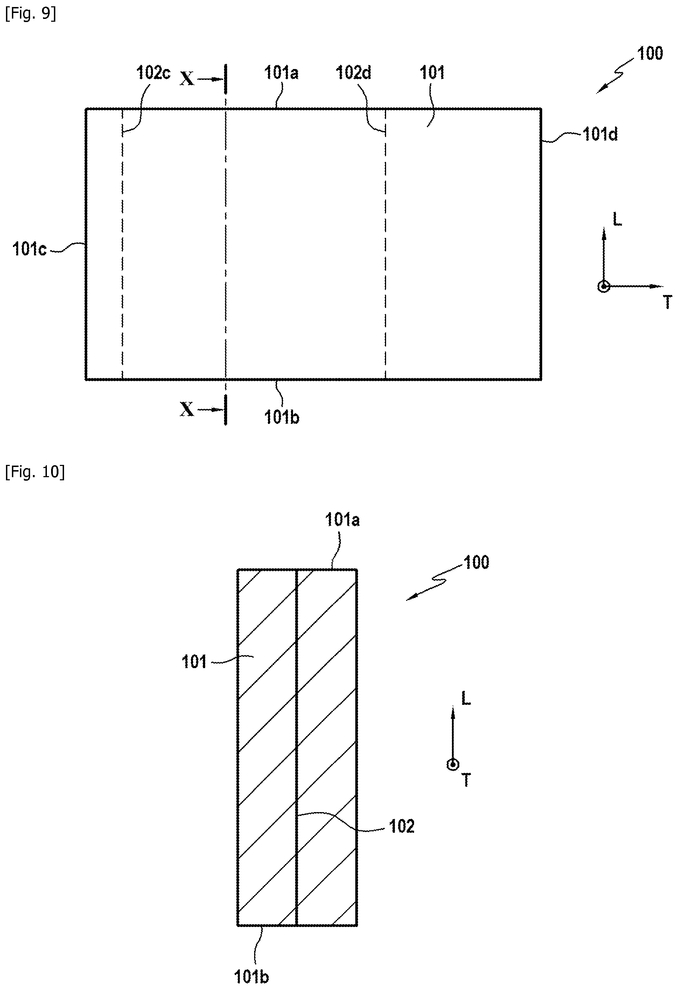

Selon un premier mode de réalisation du procédé de l'invention présenté sur les figures 9 à 12, on réalise une ébauche fibreuse 100 destinée à envelopper le noyau.

L'ébauche 100 est obtenue à partir d'une bande 101 tissée par tissage tridimensionnel (3D) ou multicouches, la bande 101 s'étendant de façon générale dans une direction L correspondant à la direction longitudinale de l'aube à fabriquer. Le tissage est réalisé par exemple avec des fils de chaîne s'étendant dans la direction L.

Une déliaison 102 est formée sensiblement au milieu de la bande 101, sur au moins une partie de la longueur de l'ébauche fibreuse 100 entre les bords longitudinaux 101c et 101d, entre des limites 102c et 102d. De préférence, la déliaison 102 doit s'étendre au moins jusqu'à l'un des bords transversaux 101a et 101b. Dans l'exemple illustré sur les figures 9 et 10, la déliaison s'étend sur toute la longueur de l'ébauche fibreuse 100, entre les bords transversaux 101a et 101b. Cette déliaison 102 permet de former une cavité interne dans l'ébauche fibreuse 100, destinée à permettre le passage du noyau précédemment réalisé.

L'ébauche fibreuse peut être réalisée par tissage 3D avec armure interlock comprenant la déliaison. Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure. De façon bien connue, la déliaison est ménagée entre deux couches de fils de chaîne en omettant de faire passer un fil de trame à travers la zone de déliaison pour lier des fils de couches de chaîne situées de part et d'autre de la déliaison.

L'ébauche fibreuse 100 comprend une pluralité de couches de fils de chaîne qui sont liées par tissage 3D sauf au niveau de la déliaison 102. Hors la déliaison 102, les couches de fils de chaîne de l'ébauche 100 sont toutes liées entre elles.

On peut utiliser pour le tissage des fils en céramique, notamment des fils à base de carbure de silicium (SiC), par exemple ceux fournis sous la dénomination « Nicalon » par la société japonaise Nippon Carbon. D'autres fils en céramique sont utilisables notamment des fils en oxyde réfractaire, tels que des fils à base d'alumine Al₂O₃, en particulier pour des matériaux CMC de type oxyde/oxyde (fibre du renfort fibreux et et matrice en oxyde réfractaire). De préférence, on utilisera pour le tissage des fils de carbone, par exemple pour un matériau CMC à renfort fibreux en carbone.

La bande fibreuse peut être traitée pour éliminer l'ensimage présent sur les fibres et la présence d'oxyde à la surface des fibres comme connu en soi.

Egalement connu en soi, une mince couche de revêtement d'interphase de défragilisation peut être ensuite formée sur les fibres de la bande filtreuse par infiltration chimique en phase gazeuse, ou CVI (« Chemical Vapour Inflitration »). Le matériau d'interphase est par exemple du carbone pyrolytique PyC, du nitrure de bore BN ou du carbone dopé au bore BC. L'épaisseur de la couche formée est pas exemple comprise entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. La consolidation peut être réalisée en étuve.

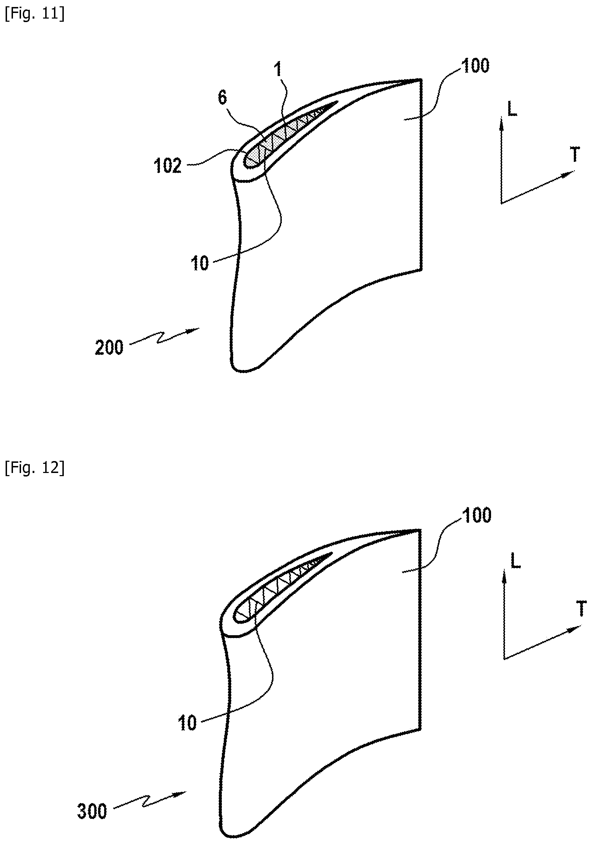

Selon ce premier mode de réalisation de l'invention, le noyau est introduit dans l'ébauche fibreuse 100 par la déliaison 102 de sorte à former une préforme fibreuse 200 comme illustré sur la figure 11. Si le noyau possède des protubérances saillantes à sa surface externe, ces dernières s'insèrent entre les fils de l'ébauche fibreuse.

On procède ensuite à la densification de la préforme fibreuse 200 en comblant la porosité de la préforme, dans tout ou partie du volume de celle-ci, par le matériau constitutif de la matrice. La matrice du matériau composite de la pièce à fabriquer peut être obtenue de façon connue en soi suivant le procédé par voie liquide.

Une étape de formage peut être réalisée de préférence après l'insertion du noyau dans la préforme fibreuse. Cette étape de formage permet de réduire le foisonnement de la préforme. Cette étape de formage est de préférence réalisée à chaud, la préforme fibreuse étant mouillée ou sèche.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme disposée autour du noyau est placée dans un moule pouvant être fermé de manière étanche avec un logement ayant la forme de la pièce finale moulée et pouvant notamment présenter une forme vrillée correspondant à la forme définitive de la pièce à fabriquer. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse est préférentiellement réalisée par le procédé bien connu de moulage par transfert dit RTM ("Resin Transfert Moulding"). Conformément au procédé RTM, on place la préforme fibreuse disposée autour du noyau dans un moule présentant la forme extérieure de la pièce souhaitée. Le noyau peut jouer le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles l'aube est soumise. Une fois la résine injectée dans tout le renfort, on procède à sa polymérisation par traitement thermique conformément au procédé RTM.

La partie fugace 6 du noyau est ensuite éliminée. Si un accès direct à toutes les parties fugaces du noyau n'est pas possible, des alésages peuvent être effectués dans les parties non fonctionnelles de l'aube en matériau composite. Par exemple, dans le cas d'un redresseur de flux, on choisira de réaliser les alésages dans les plateformes.

Une solution adaptée est mise en contact avec les parties fugaces 6 du noyau de sorte à pouvoir les éliminer. Par exemple, pour éliminer les parties fugaces à base de sable, la solution peut contenir au moins un solvant organique tel que le diméthylformamide, la pipéridine, le tétrahydrofuranne ou la butanone. Une solution basique peut également être utilisée, par exemple pour éliminer les parties fugaces réalisées en matériau du type ST-130^{™} FDM commercialisé par la société Stratasys. Dans le cas de parties fugaces hydrosolubles, l'utilisation d'eau pressurisée est suffisante pour éliminer les parties fugaces.

On obtient ainsi une aube en matériau composite 300 ayant une cavité interne renforcée par une structure de renfort 10, comme illustré sur la figure 12. Si la structure de renfort comprend des protubérances saillantes, ces dernières sont insérées entre les fils du matériau composite afin de créer une accroche mécanique entre la structure de renfort et la partie de l'aube en matériau composite fabriquée par le procédé RTM.

Selon un deuxième mode de réalisation du procédé de l'invention (variante non illustrée), on réalise l'aube en matériau composite ayant une cavité interne de manière bien connue par drapage. Ainsi, on applique des couches fibreuses sur le noyau précédemment réalisé. Les couches fibreuses peuvent être pré-imprégnées de résine précurseur de matrice, ou peuvent être des strates sèches qui seront densifiées par une résine après drapage. Les couches fibreuses peuvent être des tissus unidimensionnels, bidimensionnels ou tridimensionnels, sous réserve d'avoir une épaisseur permettant le drapage. Les couches fibreuses peuvent également présenter des nappes de fibres longues discontinues, à répartition maîtrisée ou aléatoire.

La ou les résines d'imprégnation des couches sont réticulées par un même traitement thermique réalisé sur l'ensemble des couches fibreuses. On obtient ainsi une enveloppe en matériau composite autour du noyau.

L'aube en matériau composite peut également être obtenue de manière bien connue par thermocompression de stratification de plis.

La partie fugace 6 du noyau est ensuite éliminée. Si un accès direct à toutes les parties fugaces du noyau n'est pas possible, des alésages peuvent être effectués dans les parties non fonctionnelles de l'aube en matériau composite. Par exemple, dans le cas d'un redresseur de flux, on choisira de réaliser les alésages dans les plateformes.

Une solution adaptée est mise en contact avec les parties fugaces du noyau de sorte à pouvoir les éliminer. Par exemple, pour éliminer les parties fugaces à base de sable, la solution peut contenir au moins un solvant organique tel que le diméthylformamide, la pipéridine, le tétrahydrofuranne ou la butanone. Une solution basique peut également être utilisée, par exemple pour éliminer les parties fugaces réalisées en matériau du type ST-130^{™} FDM commercialisé par la société Stratasys. Dans le cas de parties fugaces hydrosolubles, l'utilisation d'eau est suffisante pour éliminer les parties fugaces.

On obtient ainsi une aube en matériau composite ayant une cavité interne renforcée par une structure de renfort. Si la structure de renfort comprend des protubérances saillantes, ces dernières sont insérées entre les fils du matériau composite afin de créer une accroche mécanique entre la structure de renfort et les peaux en matériau composite de l'aube.

## Revendications

1. Procédé de fabrication d'une aube (300) de turbomachine en matériau composite ayant une cavité, comprenant au moins :
- la réalisation d'un noyau (1 ; 2 ; 3 ; 4) ayant la forme de la cavité de l'aube (300) à fabriquer, ledit noyau comprenant une structure de renfort (10 ; 20 ; 30 ; 40) occupant seulement une partie du volume du noyau, le volume restant du noyau étant occupé par un matériau à caractère fugace (6), la structure de renfort (10 ; 40) présentant au moins en partie une architecture en treillis,
- la formation d'une peau en matériau composite autour du noyau (1 ; 2 ; 3 ; 4), et
- l'élimination du matériau à caractère fugace (6) pour obtenir une aube (300) en matériau composite (300) ayant une cavité renforcée par la structure de renfort (10 ; 20 ; 30 ; 40).

2. Procédé de fabrication selon la revendication 1, dans lequel la structure de renfort (20 ; 30 ; 40) comprend au moins un élément de soutien (20 ; 31 ; 32 ; 41 ; 42) joignant deux parois de la cavité en regard l'une de l'autre.

3. Procédé de fabrication selon la revendication 2, dans lequel l'élément de soutien (20 ; 31 ; 41) est positionné sur un ou plusieurs ventres des modes propres de vibration des parois de la cavité.

4. Procédé de fabrication selon la revendication 2 ou 3, dans lequel l'élément de soutien (32 ; 42) est un corps plein épousant la forme d'une partie de la cavité.

5. Procédé de fabrication selon l'une quelconque des revendications 1 à 4, dans lequel la structure de renfort (10) comprend des protubérances (11) en saillie vers l'extérieur du noyau (1).

6. Procédé de fabrication selon l'une quelconque des revendications 1 à 5, dans lequel la peau en matériau composite est réalisée par l'injection d'une résine précurseur de matrice dans une préforme fibreuse (200) recouvrant le noyau (1), le procédé comprenant en outre le traitement de ladite résine pour obtenir une peau comprenant un renfort fibreux densifié par ladite matrice.

7. Procédé de fabrication selon la revendication 6, dans lequel la préforme fibreuse (200) est réalisée par insertion du noyau (1) dans une déliaison (102) d'une ébauche fibreuse (100) réalisée en une seule pièce par tissage tridimensionnel de fils.

8. Procédé de fabrication selon la revendication 6, dans lequel la préforme fibreuse est obtenue par drapage de strates fibreuses autour du noyau.

9. Procédé de fabrication selon l'une quelconque des revendications 1 à 5, dans lequel la peau en matériau composite est réalisée par drapage de strates fibreuses pré-imprégnées d'une résine précurseur de matrice autour du noyau, le procédé comprenant en outre le traitement de ladite résine pour obtenir une peau comprenant un renfort fibreux densifié par ladite matrice.

## Patentansprüche

1. Verfahren zur Herstellung einer Schaufel (300) aus Verbundmaterial, die einen Hohlraum aufweist, für eine Turbomaschine, umfassend zumindest:
- die Verwirklichung eines Kerns (1; 2; 3; 4), der die Form des Hohlraums der Schaufel (300) aufweist, die hergestellt werden soll, wobei der Kern eine Verstärkungsstruktur (10; 20; 30; 40) umfasst, die nur einen Teil des Volumens des Kerns beansprucht, wobei das verbleibende Volumen des Kerns von einem Material (6) mit flüchtigem Charakter beansprucht wird, wobei die Verstärkungsstruktur (10; 40) zumindest zum Teil eine Gitterarchitektur aufweist,
- die Bildung einer Haut aus Verbundmaterial um den Kern (1; 2; 3; 4) herum,
- die Entfernung des Materials (6) mit flüchtigem Charakter, um eine Schaufel (300) aus Verbundmaterial (300) zu erhalten, die einen Hohlraum aufweist, der von der Verstärkungsstruktur (10; 20; 30; 40) beansprucht wird.

2. Herstellungsverfahren nach Anspruch 1, wobei die Verstärkungsstruktur (20; 30; 40) zumindest ein Stützelement (20; 31; 32; 41; 42) umfasst, das zwei Wände des Hohlraums, die einander zugewandt sind, vereinigt.

3. Herstellungsverfahren nach Anspruch 2, wobei das Stützelement (20; 31; 41) auf einer oder mehreren Bauchzonen der Eigenschwingungsmoden der Wände des Hohlraums positioniert wird.

4. Herstellungsverfahren nach Anspruch 2 oder 3, wobei das Stützelement (32; 42) ein voller Körper ist, der an die Innenform eines Teils des Hohlraums angepasst ist.

5. Herstellungsverfahren nach einem der Ansprüche 1 bis 4, wobei die Verstärkungsstruktur (10) Vorsprünge (11) umfasst, die von dem Kern (1) nach außen wegragen.

6. Herstellungsverfahren nach einem der Ansprüche 1 bis 5, wobei die Haut aus Verbundmaterial durch Einspritzen eines Harzvorläufers der Matrix in eine den Kern (1) bedeckende Faservorform (200) hergestellt wird, wobei das Verfahren ferner die Behandlung des Harzes umfasst, um eine Haut zu erhalten, die eine durch die Matrix verdichtete Faserverstärkung umfasst.

7. Herstellungsverfahren nach Anspruch 6, wobei die Faservorform (200) durch Einsetzen des Kerns (1) in eine Entbindung (102) eines Faserrohlings (100) verwirklicht wird, der in einem Stück durch dreidimensionale Verwebung von Fäden hergestellt wird.

8. Herstellungsverfahren nach Anspruch 6, wobei die Faservorform durch Drapierung von Faserschichten um den Kern herum erhalten wird.

9. Herstellungsverfahren nach einem der Ansprüche 1 bis 5, wobei die Haut aus Verbundmaterial durch Drapierung von Faserschichten, die mit einem Harzvorläufer der Matrix vorimprägniert sind, um den Kern herum verwirklicht wird, wobei das Verfahren ferner die Behandlung des Harzes umfasst, um eine Haut zu erhalten, die eine durch die Matrix verdichtete Faserverstärkung umfasst.

## Claims

1. A method for manufacturing a turbomachine vane (300) made of composite material and having a cavity, comprising at least:
- making a core (1; 2; 3; 4) with the shape of the cavity of the vane (300) to be manufactured, said core comprising a reinforcing structure (10; 20; 30; 40) occupying only part of the volume of the core, the remaining volume of the core being occupied by a material of a fleeting nature (6), the reinforcing structure (10; 40) having at least partly lattice architecture,
- forming a composite material skin around the core (1; 2; 3; 4), and
- eliminating the fleeting material (6) to obtain a composite material vane (300) with a cavity reinforced by the reinforcing structure (10; 20; 30; 40).

2. The manufacturing method according to claim 1, wherein the reinforcing structure (20; 30; 40) comprises at least one support element (20; 31; 32; 41; 42) joining two walls of the cavity facing each other.

3. The manufacturing method according to claim 2, wherein the support element (20; 31; 41) is positioned on one or several antinodes of the natural modes of vibration of the walls of the cavity.

4. The manufacturing method according to claim 2 or 3, wherein the support element (32; 42) is a solid body matching the shape of a portion of the cavity.

5. The manufacturing method according to any one of claims 1 to 4, wherein the reinforcing structure (10) comprises protrusions (11) projecting towards the outside of the core (1).

6. The manufacturing method according to any one of claims 1 to 5, wherein the composite material skin is made by injection of a matrix precursor resin into a fibrous preform (200) covering the core (1), the method further comprising the treatment of said resin to obtain a skin comprising a fibrous reinforcement densified by said matrix.

7. The manufacturing method according to claim 6, wherein the fibrous preform (200) is made by insertion of the core (1) into a non-interlinking (102) of a fibrous blank (100) made in one piece by three-dimensional weaving of yarns.

8. The manufacturing method according to claim 6, wherein the fibrous preform is obtained by draping of fibrous layers around the core.

9. The manufacturing method according to any one of claims 1 to 5, wherein the composite material skin is made by draping of fibrous strata preimpregnated with a matrix precursor resin around the core, the method further comprising the treatment of said resin to obtain a skin comprising a fibrous reinforcement densified by said matrix.
